# EUROPEAN PATENT SPECIFICATION

(11) **EP 3 051 788 B1**
(45) Date of publication and mention of the grant of the patent: **06.05.2020**
(21) Application number: 14785183.6
(22) Date of filing: 23.04.2014
(51) Int. Cl.: H04M 3/533

(54) **TERMINAL EQUIPMENT AND EMERGENCY VOICE MESSAGING METHOD**
ENDGERÄTAUSRÜSTUNG UND SPRACHNACHRICHTENVERFAHREN FÜR NOTFÄLLE
ÉQUIPEMENT TERMINAL ET PROCÉDÉ DE MESSAGERIE VOCALE D'URGENCE

(30) Priority: 23.09.2013 CN 201310435790
(43) Date of publication of application: 03.08.2016
(73) Proprietor: ZTE Corporation, Guangdong Province 518057 (CN)
(72) Inventor: ZHANG, Hongdang, Shenzhen Guangdong Province 518057 (CN); JIANG, Rong, Shenzhen Guangdong Province 518057 (CN)
(74) Representative: Novagraaf Technologies
(86) International application number: PCT/CN2014/076062
(87) International publication number: WO 2014/169858

(56) References cited:
- CN-A- 1 635 771
- CN-A- 101 222 547
- CN-A- 102 571 310
- CN-A- 102 946 499
- GB-A- 2 322 768
- US-A1- 2008 019 488
- US-A1- 2010 002 865
- US-A1- 2011 123 005

## Description

### Technical Field

The present disclosure relates to the communication field, especially relates to terminal equipment and an emergency method for leaving a voice message.

### Background

During a commercial operation of a voicemail service, the database and disk array are most likely to break down. After these two types of equipment break down, the minimum user experience needs to be ensured so as to reduce the users' complaint rate caused by equipment malfunction. Other devices are either too important, which become irreparable such as SAG, SAC, Sipproxy and MS, or not important that there is no need to take any emergency measure for these devices such as statistical, web, SMP and short message interface.

Currently, there are patents related to disaster tolerance, but these patents are very complex to implement and have a relatively high cost, which makes them not suitable for small or low-cost communication points.

Document D1 (US 20080019488A1) and D7 (US 2010/002865 A1) provide related technical solutions; however, the above mentioned problem still remains unsolved.

### Summary

The technical problem solved by embodiments of the present disclosure is to provide terminal equipment and an emergency method for leaving a voice message, so as to ensure the basic service of a voicemail.

In order to solve the abovementioned technical problem, an embodiment of the present disclosure provides terminal equipment, comprising: a message leaving component, configured to receive a message from a calling party, and record message time and/or caller number information;
an emergency monitoring component, configured to monitor a main service, and under an abnormal circumstance of the main voicemail service, switch off the main service and enable an emergency service; wherein the message leaving component is configured to receive a message from a calling party, and record message time and/or caller number information according to a service provided by the emergency service.

A message listening component, configured to, according to the service provided by the emergency service, guide and prompt a called party to listen to a message received by the message leaving component, and configured to, according to the service provided by the emergency service, play content of the message, the message time and a caller number, and/or record a listening record of the message.

An emergency strategy component, configured to provide an emergency strategy for the message leaving component and the message listening component, wherein the emergency strategy comprises: a priority order of a message listening function of the message listening component, a message leaving function of the message leaving component, and a prompting function of the message leaving component and the message listening component is ranked from top to bottom.

A message parsing component, configured to parse out the content of the message, message time, and the caller number from the message received by the message leaving component, and send the content of the message, the message time, and the caller number to the message listening component.

A message storage component, configured to store the content of the message received by the message listening component, message time and/or the caller number.

An alarm record component, configured to create a notification message in a case that the emergency monitoring component switches off the main service and enables an emergency service, wherein the notification message comprises a message notifying at least one maintainer that the emergency service is enabled.

An emergency recovery component, configured to, after the main service is recovered, import message information, recorded during an execution phase of the emergency service, into a database of the main service.

The embodiments of the present disclosure further provide an emergency method for leaving a voice message, comprising:
monitoring a main service, and under an abnormal circumstance of the main voicemail service, switching off the main service and enabling an emergency service; and
receiving a message from a calling party, and recording message time, and caller number information according to a service provided the emergency service.

Wherein, the emergency method for leaving the voice message further comprises:
according to the service provided the emergency service, guiding and prompting a called party to listen to the received message, playing content of the message, the message time and a caller number, and/or recording a listening record of the message.

Wherein, the emergency method for leaving the voice message further comprises:
creating a notification message in a case of switching off the main service and enabling an emergency service, wherein the notification message comprises a message notifying at least one maintainer that the emergency service is enabled; and/or
after the main service is recovered, importing message information, recorded during an execution phase of the emergency service, into a database of the main service.

The technical solution of the embodiments of the present disclosure has beneficial effects as follows.

According to the terminal equipment and the emergency method for leaving a voice message, an emergency service is enabled once a malfunction of a main service is detected, so that the emergency service can replace the main service to provide services. The emergency service may provide different levels of emergency services according to different emergency strategies. The calling party may leave a message to the called party through the message leaving component; the called party may listen to message information, which was left during the emergency, through the message listening component, to ensure a basis service of a voicemail.

### Brief Description of the Accompanying Drawings

Fig. 1 is a diagram showing the relationship among components of terminal equipment of the embodiment of the present disclosure;
Fig. 2 is a flow chart of emergency monitoring of the embodiment of the present disclosure;
Fig. 3 is a flow chart of emergency messaging of the embodiment of the present disclosure;
Fig. 4 is a flow chart of listening to an emergency message of the embodiment of the present disclosure;
Fig. 5 is a flow chart of an emergency recovery of the embodiment of the present disclosure.

### Detailed Description of the Embodiments

In order to make the objectives of the invention, the technical solutions and advantages more clearly and understandable, the embodiments of the present disclosure will be described hereinafter in detail in conjunction with the drawings thereof.

In order to solve the problems that the patents related to disaster tolerance are very complex to implement and have a relatively high cost, which makes them not suitable for small or low-cost communication points, the embodiments of the present disclosure provide terminal equipment and an emergency method for leaving a voice message.

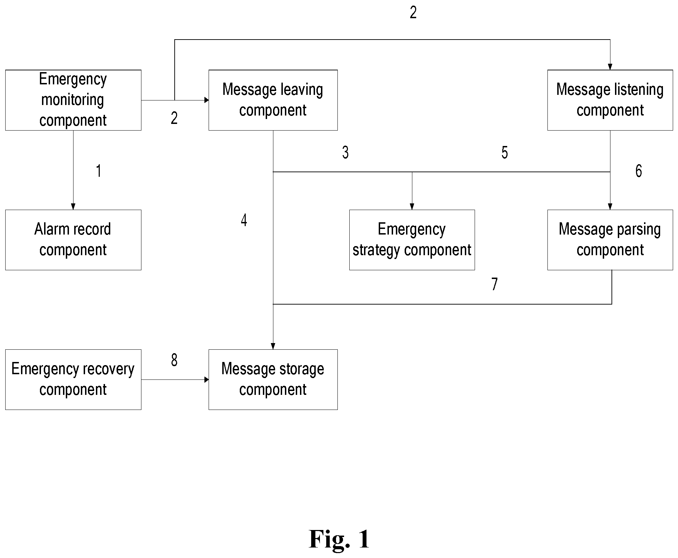

As shown in Fig.1, an embodiment of the present disclosure provides terminal equipment, wherein the terminal equipment comprises:
a message leaving component, configured to receive a message from a calling party, and record message time and/or caller number information;
an emergency monitoring component, configured to monitor a main service, under an abnormal circumstance, switch off the main service and enable an emergency service; wherein the message leaving component is configured to receive a message from a calling party, and record message time and/or caller number information according to a service provided by the emergency service.

A message listening component is configured to, according to the service provided by the emergency service, guide and prompt a called party to listen to a message received by the message leaving component, and configured to, according to the service provided by the emergency service, play content of the message, message time and a caller number, and/or record a listening record of the message.

An emergency strategy component is configured to provide an emergency strategy for the message leaving component and the message listening component, wherein the emergency strategy comprises: a priority order of a message listening function of the message listening component, a message leaving function of the message leaving component, and a prompting function of the message leaving component and the message listening component is ranked from top to bottom.

The terminal equipment further comprises a message parsing component, configured to parse out the content of the message, the message time, and the caller number from the message received by the message leaving component, and send the content of the message, the message time, and the caller number to the message listening component.

A message storage component is configured to store the content of the message received by the message listening component, the message time and/or the caller number.

An alarm record component is configured to create a notification message in a case that the emergency monitoring component switches off the main service and enables an emergency service, wherein the notification message comprises a message notifying at least one maintainer that the emergency service is enabled.

An emergency recovery component is configured to, after the main service is recovered, import message information, recorded during an execution phase of the emergency service, into a database of the main service.

In the foregoing embodiment, in the case of detecting a malfunction of the main service, the emergency service is enabled to replace the main service. The emergency service may provide different levels of emergency services according to different emergency strategies. The calling party may leave a message to the called party through the message leaving component, and the called party may listen to the message, which was left during the emergency, through the message listening component, therefore the basic service of a voicemail is ensured. What's more, the terminal equipment is low in cost, simply deployed and can provide a basic service at a comparatively low cost and prolong servable time of a communication system, which significantly reduce the negative impact on users and improve the users' satisfaction.

The embodiments of the present disclosure further provide an emergency method for leaving a voice message, wherein the method comprises: a main service is monitored, the main service is switched off and an emergency service is enabled under an abnormal circumstance; and a message from a calling party is received, message time and caller number information are recorded according to a service provided by the emergency service.

The emergency method for leaving the voice message further comprises: a called party is guided and prompted to listen to the received message according to the service provided the emergency service, to play content of the message, message time and a caller number, and/or a listening record of the message is recorded.

The emergency method for leaving the voice message further comprises: a notification message is created in a case of switching off the main service and enabling an emergency service, wherein the notification message comprises a message notifying at least one maintainer that the emergency service is enabled; and/or after the main service is recovered, message information, recorded during an execution phase of the emergency service, is imported into a database of the main service.

In the foregoing embodiment, the running condition of the main service is monitored by the emergency monitoring component, in the case of detecting a malfunction of the main service, the emergency service is enabled to replace the main service. The emergency service may provide different levels of emergency services according to different emergency strategies. The calling party may leave a message to the called party through the message leaving component; the called party may listen to the message, which was left during the emergency, through the message listening component, therefore the basic service of the voicemail is ensured. The emergency recovery component may recover the message information, recorded during an execution phase of the emergency service, into the normal communication system.

In conjunction with the showings, the specific processes of the foregoing embodiments are described as follows.

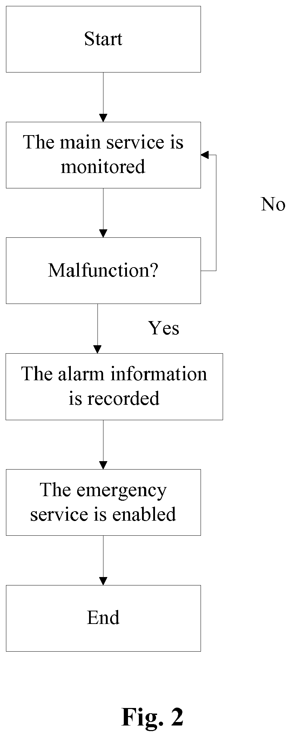

As show in Fig. 2, after the emergency monitoring component detects the malfunction of the main service, the emergency monitoring component switches off the main service and enables the emergency service. At this point, the emergency service takes over the job of the main service, records enable-logging and notifies a maintainer or maintainers that the emergency service is enabled.

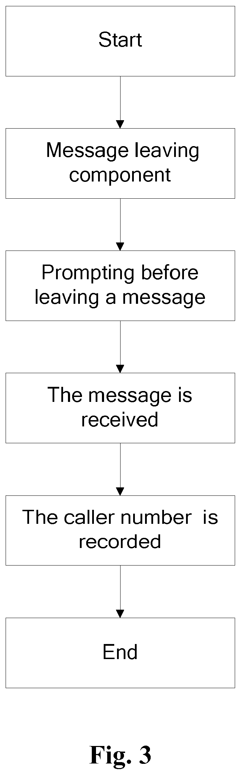

As shown in Fig. 3, after the calling party makes a call and the call is switched to the voicemail, the message leaving component is in charge of processing and receiving the calling party's message, and recording information such as the number of the calling party, message time and the like.

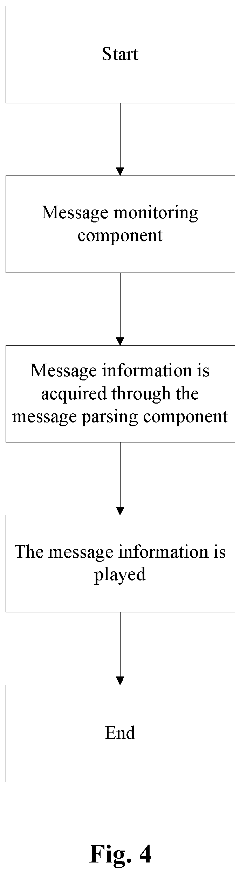

As shown in Fig. 4, the message listening component is in charge of processing in the case that the called party is listening to the message of his voicemail. The message leaving component invokes the message parsing component to acquire the information such as the caller number, the message time and the like, then plays the information to the called party, and records the listening record of the message. In the case that the called party is calling the emergency service, the called party becomes the calling party.

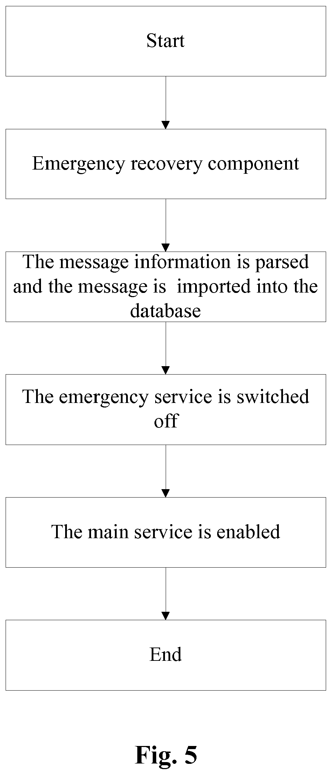

As shown in Fig. 5, after the main service is recovered, the emergency recovery component is in charge of importing messages, which are received during the execution phase of the emergency service, into the database of the main service, then switching off the emergency service and enabling the main service to recover the normal running of the service.

In addition, the implementing method and systematic processing procedure of the embodiments of the present disclosure is described in detail hereinafter in conjunction with the specific application scenario. S1 is defined as the main service, S2 is defined as the emergency service, M is defined as the emergency monitoring component, A is defined as the calling party, and B is defined as the called party and the number of the voicemail.
Step 1: M detects the malfunction of S1, switches off S1 and enables S2 at the same time, and S2 takes over the service.
Step 2: A calls B to trigger an emergency service S2. The message left by A is received and processed by a message leaving process, and meanwhile, the caller number is recorded as A, and the message time is recorded as T.
Step 3: B calls the emergency service to listen to the message which belongs to B. The caller number A, message time T and the content of the message is played by a message listening process.
Step 4: After maintainers recover the main service, the maintainers use emergency recovery tool to recover the message received during the execution phase of the emergency service, switch off S2, and recover the running of S1.

The terminal equipment and the emergency method for leaving the voice message of those abovementioned embodiments are provided. The terminal equipment is low in cost, simply deployed and can provide a basic service at a comparatively low cost and prolong servable time of a communication system, which significantly reduce the negative impact on users and improve the users' satisfaction.

The foregoing are merely example embodiments of the present application. Those skilled in the art could make various corresponding modifications and variations according to the present disclosure without deviating from the essence of the present disclosure, while these corresponding modifications and variations should fall within the protection scope defined by the claims of the present disclosure.

### Industrial Applicability

As mentioned above, the terminal equipment and the emergency method for leaving a voice message provided by the embodiments of the present disclosure have beneficial effects as follows: the terminal equipment is low in cost, simply deployed and can provide a basic service at a comparatively low cost and prolong servable time of a communication system, which significantly reduce the negative impact on users and improve the users' satisfaction.

## Claims

1. Terminal equipment, comprising:
a message leaving component, configured to receive a message from a calling party, and record message time and/or caller number information;
further comprising:
an emergency monitoring component, connected with the message leaving component and configured to monitor a main voicemail service, and under an abnormal circumstance of the main voicemail service, switch off the main voicemail service and enable an emergency voicemail service ;
wherein the message leaving component is configured to receive a message from a calling party, and record message time and/or caller number information according to a serving provided by the emergency voicemail service .

2. The terminal equipment as claimed in claim 1, further comprising:
a message listening component, configured to, according to the serving provided by the emergency voicemail service, guide and prompt a called party to listen to a message received by the message leaving component, and configured to, according to the serving provided by the emergency voicemail service , play content of the message, the message time and a caller number, and/or record a listening record of the message.

3. The terminal equipment as claimed in claim 2, further comprising:
an emergency strategy component, configured to provide an emergency strategy for the message leaving component and the message listening component, wherein the emergency strategy comprises: a priority order of following functions: a message listening function of the message listening component, a message leaving function of the message leaving component, and a prompting function of the message leaving component and the message listening component is ranked from top to bottom.

4. The terminal equipment as claimed in claim 2, further comprising:
a message parsing component, configured to parse out the content of the message, the message time and the caller number from the message received by the message leaving component, and send the content of the message, the message time and the caller number to the message listening component.

5. The terminal equipment as claimed in claim 1, further comprising:
a message storage component, configured to store content of the message received by the message listening component, the message time and/or the caller number.

6. The terminal equipment as claimed in claim 1, further comprising:
an alarm record component, configured to create a notification message in a case that the emergency monitoring component switches off the main voicemail service and enables an emergency voicemail service , wherein the notification message comprises a message notifying at least one maintainer that the emergency voicemail service is enabled.

7. The terminal equipment as claimed in any one of claims 1-6, further comprising:
an emergency recovery component, configured to, after the main voicemail service is recovered, import message information, recorded during an execution phase of the emergency voicemail service , into a database of the main voicemail service.

8. An emergency method for leaving a voice message, comprising:
monitoring a main voicemail service, and under an abnormal circumstance of the main voicemail service, switching off the main voicemail service and enabling an emergency voicemail service ; and
receiving a message from a calling party and recording message time and caller number information according to a serving provided by the emergency voicemail service.

9. The emergency method for leaving the voice message as claimed in claim 8, further comprising:
according to the serving provided the emergency voicemail service , guiding and prompting a called party to listen to the received message, playing content of the message, the message time and a caller number, and/or recording a listening record of the message.

10. The emergency method for leaving the voice message as claimed in claim 8, further comprising:
creating a notification message in a case of switching off the main voicemail service and enabling an emergency voicemail service , wherein the notification message comprises a message notifying at least one maintainer that the emergency voicemail service is enabled; and/or
after the main voicemail service is recovered, importing message information, recorded during an execution phase of the emergency voicemail service , into a database of the main voicemail service.

## Patentansprüche

1. Endgerät, umfassend:
eine Nachrichten-Hinterlassungskomponente, die dazu konfiguriert ist, eine Nachricht von einem anrufenden Teilnehmer zu empfangen und Nachrichtenuhrzeit- und/oder Anrufer-Rufnummerninformationen aufzuzeichnen;
weiter umfassend:
eine Notfallüberwachungskomponente, die mit der Nachrichten-Hinterlassungskomponente verbunden und dazu konfiguriert ist, einen Haupt-Sprachnachrichtendienst zu überwachen und unter einem anormalen Umstand des Haupt-Sprachnachrichtendienstes den Haupt-Sprachnachrichtendienst abzuschalten und einen Not-Sprachnachrichtendienst zu aktivieren;
wobei die Nachrichten-Hinterlassungskomponente dazu konfiguriert ist, eine Nachricht von einem anrufenden Teilnehmer gemäß einem Dienst, der vom Not-Sprachnachrichtendienst bereitgestellt wird, zu empfangen und Nachrichtenuhrzeit- und/oder Anrufer-Rufnummerninformationen aufzuzeichnen.

2. Endgerät nach Anspruch 1, weiter umfassend:
eine Nachrichten-Abhörkomponente, die dazu konfiguriert ist, einen angerufenen Teilnehmer gemäß dem vom Not-Sprachnachrichtendienst bereitgestellten Dienst anzuleiten und aufzufordern, um eine Nachricht, die von der Nachrichten-Hinterlassungskomponente empfangen wurde, abzuhören, und dazu konfiguriert ist, Inhalt der Nachricht, die Nachrichtenuhrzeit und eine Anrufer-Rufnummer gemäß dem vom Not-Sprachnachrichtendienst bereitgestellten Dienst wiederzugeben und/oder ein Abhörverzeichnis der Nachricht aufzuzeichnen.

3. Endgerät nach Anspruch 2, weiter umfassend:
eine Notfallstrategiekomponente, die dazu konfiguriert ist, eine Notfallstrategie für die Nachrichten-Hinterlassungskomponente und die Nachrichten-Abhörkomponente bereitzustellen, wobei die Notfallstrategie umfasst: eine Prioritätenreihenfolge folgender Funktionen: einer Nachrichten-Abhörfunktion der Nachrichten-Abhörkomponente, einer Nachrichten-Hinterlassungsfunktion der Nachrichten-Hinterlassungskomponente, und einer Aufforderungsfunktion der Nachrichten-Hinterlassungskomponente und der Nachrichten-Abhörkomponente, die von oben nach unten geordnet ist.

4. Endgerät nach Anspruch 2, weiter umfassend:
eine Nachrichten-Analysekomponente, die dazu konfiguriert ist, den Inhalt der Nachricht, die Nachrichtenuhrzeit und die Anrufer-Rufnummer aus der von der Nachrichten-Hinterlassungskomponente empfangenen Nachricht zu analysieren und den Inhalt der Nachricht, die Nachrichtenuhrzeit und die Anrufer-Rufnummer an die Nachrichten-Abhörkomponente zu senden.

5. Endgerät nach Anspruch 1, weiter umfassend:
eine Nachrichten-Speicherkomponente, die dazu konfiguriert ist, Inhalt der von der Nachrichten-Abhörkomponente empfangenen Nachricht, die Nachrichtenuhrzeit und/oder die Anrufer-Rufnummer zu speichern.

6. Endgerät nach Anspruch 1, weiter umfassend:
eine Alarm-Aufzeichnungskomponente, die dazu konfiguriert ist, in einem Fall, in dem die Notfallüberwachungskomponente den Haupt-Sprachnachrichtendienst abschaltet und einen Not-Sprachnachrichtendienst aktiviert, eine Benachrichtigung zu erzeugen, wobei die Benachrichtigung eine Nachricht umfasst, die mindestens einen Instandhalter darüber benachrichtigt, dass der Not-Sprachnachrichtendienst aktiviert ist.

7. Endgerät nach einem der Ansprüche 1-6, weiter umfassend:
eine Notfallwiederherstellungskomponente, die dazu konfiguriert ist, nachdem der Haupt-Sprachnachrichtendienst wiederhergestellt ist, Nachrichteninformationen, die während einer Ausführungsphase des Not-Sprachnachrichtendienstes aufgezeichnet wurden, in eine Datenbank des Haupt-Sprachnachrichtendienstes zu importieren.

8. Notfallverfahren zum Hinterlassen einer Sprachnachricht, umfassend:
Überwachen eines Haupt-Sprachnachrichtendienstes und, unter einem anormalen Umstand des Haupt-Sprachnachrichtendienstes, Abschalten des Haupt-Sprachnachrichtendienstes und Aktivieren eines Not-Sprachnachrichtendienstes; und
Empfangen einer Nachricht von einem anrufenden Teilnehmer und Aufzeichnen von Nachrichtenuhrzeit und Anrufer-Rufnummerninformationen gemäß einem Dienst, der vom Not-Sprachnachrichtendienst bereitgestellt wird.

9. Notfallverfahren zum Hinterlassen der Sprachnachricht nach Anspruch 8, weiter umfassend:
Anleiten und Auffordern eines angerufenen Teilnehmers gemäß dem vom Not-Sprachnachrichtendienst bereitgestellten Dienst, um die empfangene Nachricht abzuhören, Wiedergeben von Inhalt der Nachricht, der Nachrichtenuhrzeit und einer Anrufer-Rufnummer, und/oder Aufzeichnen eines Abhörverzeichnisses der Nachricht.

10. Notfallverfahren zum Hinterlassen der Sprachnachricht nach Anspruch 8, weiter umfassend:
Erzeugen einer Benachrichtigung in einem Fall des Abschaltens des Haupt-Sprachnachrichtendienstes und Aktivierens eines Not-Sprachnachrichtendienstes, wobei die Benachrichtigung eine Nachricht umfasst, die mindestens einen Instandhalter darüber benachrichtigt, dass der Not-Sprachnachrichtendienst aktiviert ist; und/oder
Importieren von Nachrichteninformationen, die während einer Ausführungsphase des Not-Sprachnachrichtendienstes aufgezeichnet wurden, in eine Datenbank des Haupt-Sprachnachrichtendienstes, nachdem der Haupt-Sprachnachrichtendienst wiederhergestellt ist.

## Revendications

1. Équipement terminal, comprenant :
un composant pour laisser un message, configuré pour recevoir un message d'un tiers appelant, et enregistrer une heure de message et/ou des informations de numéro d'appelant ;
comprenant en outre :
un composant de surveillance d'urgence, connecté au composant pour laisser un message et configuré pour surveiller un service de messagerie vocale principal, et dans une circonstance anormale du service de messagerie vocale principal, désactiver le service de messagerie vocale principal et activer un service de messagerie vocale d'urgence ;
dans lequel le composant pour laisser un message est configuré pour recevoir un message d'un tiers appelant, et enregistrer une heure de message et/ou des informations de numéro d'appelant selon une prestation fournie par le service de messagerie vocale d'urgence.

2. Équipement terminal selon la revendication 1, comprenant en outre :
un composant d'écoute de message, configuré, selon la prestation fournie par le service de messagerie vocale d'urgence, pour guider et inviter un tiers appelé à écouter un message reçu par le composant pour laisser un message, et configuré, selon la prestation fournie par le service de messagerie vocale d'urgence, pour lire un contenu du message, l'heure de message et un numéro d'appelant, et/ou enregistrer un enregistrement d'écoute du message.

3. Équipement terminal selon la revendication 2, comprenant en outre :
un composant de stratégie d'urgence, configuré pour fournir une stratégie d'urgence au composant pour laisser un message et au composant d'écoute de message, dans lequel la stratégie d'urgence comprend : un ordre de priorité de fonctions suivantes : une fonction d'écoute de message du composant d'écoute de message, une fonction pour laisser un message du composant pour laisser un message, et une fonction d'invite du composant pour laisser un message et du composant d'écoute de message, qui est classé de haut en bas.

4. Équipement terminal selon la revendication 2, comprenant en outre :
un composant d'analyse syntaxique de message, configuré pour analyser syntaxiquement le contenu du message, l'heure de message et le numéro d'appelant à partir du message reçu par le composant pour laisser un message, et envoyer le contenu du message, l'heure de message et le numéro d'appelant au composant d'écoute de message.

5. Équipement terminal selon la revendication 1, comprenant en outre :
un composant de stockage de message, configuré pour stocker un contenu du message reçu par le composant d'écoute de message, l'heure de message et/ou le numéro d'appelant.

6. Équipement terminal selon la revendication 1, comprenant en outre :
un composant d'enregistrement d'alarme, configuré pour créer un message de notification dans un cas où le composant de surveillance d'urgence désactive le service de messagerie vocale principal et active un service de messagerie vocale d'urgence, dans lequel le message de notification comprend un message notifiant à au moins un mainteneur que le service de messagerie vocale d'urgence est activé.

7. Équipement terminal selon l'une quelconque des revendications 1 à 6, comprenant en outre :
un composant de récupération d'urgence, configuré, après récupération du service de messagerie vocale principal, pour importer des informations de message, enregistrées pendant une phase d'exécution du service de messagerie vocale d'urgence, dans une base de données du service de messagerie vocale principal.

8. Procédé d'urgence pour laisser un message vocal, comprenant :
la surveillance d'un service de messagerie vocale principal, et dans une circonstance anormale du service de messagerie vocale principal, la désactivation du service de messagerie vocale principal et l'activation d'un service de messagerie vocale d'urgence ; et
la réception d'un message en provenance d'un tiers appelant et l'enregistrement d'une heure de message et d'informations de numéro d'appelant selon une prestation fournie par le service de messagerie vocale d'urgence.

9. Procédé d'urgence pour laisser le message vocal selon la revendication 8, comprenant en outre :
selon la prestation fournie par le service de messagerie vocale d'urgence, le guidage et l'invite d'un tiers appelé à écouter le message reçu, la lecture d'un contenu du message, de l'heure de message et d'un numéro d'appelant, et/ou l'enregistrement d'un enregistrement d'écoute du message.

10. Procédé d'urgence pour laisser le message vocal selon la revendication 8, comprenant en outre :
la création d'un message de notification dans un cas de désactivation du service de messagerie vocale principal et d'activation d'un service de messagerie vocale d'urgence, dans lequel le message de notification comprend un message notifiant à au moins un mainteneur que le service de messagerie vocale d'urgence est activé ; et/ou
après récupération du service de messagerie vocale principal, l'importation d'informations de message, enregistrées pendant une phase d'exécution du service de messagerie vocale d'urgence, dans une base de données du service de messagerie vocale principal.
